(19) Europäisches Patentamt

European Patent Office

Office européen des brevets

(11) **EP 4 725 751 A1**

(12) **EUROPEAN PATENT APPLICATION**

(43) Date of publication:
**15.04.2026 Bulletin 2026/16**

(21) Application number: **25202344.5**

(22) Date of filing: **16.09.2025**

(51) International Patent Classification (IPC):
**B60L 53/62** (2019.01)     **B60L 53/63** (2019.01)
**B60L 53/67** (2019.01)     **G06Q 10/04** (2023.01)
**G06Q 50/06** (2024.01)     **H02J 3/32** (2026.01)

(52) Cooperative Patent Classification (CPC):
**B60L 53/63; B60L 53/62; B60L 53/64; B60L 53/67;
G06Q 10/04; G06Q 50/06; H02J 3/322;
B60L 2240/80; B60L 2250/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.10.2024 IN 202421077063**

(71) Applicant: **Tata Consultancy Services Limited
Maharashtra (IN)**

(72) Inventors:
- **KUMAR, Anshu**
  **560066 Bengaluru, Karnataka (IN)**
- **RAVEENDRAN, Rejitha**
  **560066 Bengaluru, Karnataka (IN)**
- **SHARMA, Yamini**
  **560066 Bengaluru, Karnataka (IN)**
- **MISRA, Prasant Kumar**
  **560066 Bengaluru, Karnataka (IN)**
- **VASAN, Arunchandar**
  **600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR OPTIMAL POWER ALLOCATION IN LARGE-SCALE ELECTRIC VEHICLE CHARGING NETWORK**

(57) This disclosure relates generally to a method and system for optimal power allocation in large-scale electric vehicle (EV) charging network having cluster topology. Currently, methods based on mathematical and constraint programming provide solutions for optimal power allocation but are computationally slow on large problem sizes. Reinforcement learning (RL) based learning-to-optimize (L2O) are also used for solving, but the solutions these methods provide impact the solution quality. The present disclosure provides mathematical programming-based method for optimizing power allocation decisions. The power allocation problem for the EV charging network is modelled with constraints on energy demand, power supply capacity, available network capacity, customer types and their priority level. Further the optimization problem is formulated to maximize the power flow to prime customers in the EV charging network. The problem is formulated using a mixed-integer linear program.

FIG. 2

**Description**

CROSS-REFERENCE TO RELATED APPLICATIONS AND PRIORITY

The present application claims priority to Indian application no. 202421077063, filed on October 10, 2024.

TECHNICAL FIELD

The disclosure herein generally relates to power balancing in electric vehicle charging network, and, more particularly, to a method and system for optimal power allocation in large-scale electric vehicle charging network.

BACKGROUND

The global passenger electric vehicle (EV) market has grown exponentially in recent years. Globally, around one in four new cars sold is electric. While newer buildings have provision for EV charging, most legacy buildings do not, and around 78% EV owners cannot charge at their residence. Such EVs are therefore dependent on public charging infrastructure. Deploying new charging network infrastructure at scale can be a challenge due to upfront capital expenditure (e.g., due to equipment and cabling cost), and grid-level capacity constraints (e.g., maximum power allowed to the operator).

The charging network design could potentially improve both capital expenditure and operational efficiency. A naive network topology could connect every EV charger directly to the main bus. While such a configuration helps to isolate faults easily and minimizes system downtime, it is extremely tedious to realize in practice, especially for large-scale installations. Cluster-based charging networks present an alternate topology for large-scale EV charging operations. Within compact spaces such as parking lots, the cluster model alleviates deployment complexity by organizing the charging network into clusters. Each cluster consists of a collection of EV chargers; and is connected to the main bus through a cluster bus. Because the cluster model is hierarchical, it achieves scale and reduces cost during deployment and allows modular future expansion.

The aim of charging network operator (CNO) is to maximize utilization of chargers, maintain good customer experience, and minimize grid electricity cost. Power allocation is dynamically done by either modulating charging rates based on the energy demand of EVs or their charging deadlines, or equally allocating the available power among all EVs in the charging network. This problem has further been explored in the presence of multiple energy sources where the charging network, in addition to the electrical grid, can also draw power from renewables; battery storage systems; and energy markets. There exist many approaches for solving the power allocation problem optimally. Methods based on mathematical and constraint programming provide exact solutions but are computationally slow on large problem sizes. Heuristic and learning to-optimize (L2O) methods are fast but yield approximate solutions that are sub-optimal. Reinforcement learning (RL) based L2O can generalize solutions with better accuracy (compared to heuristic methods) and achieve better scale (compared to meta-heuristic methods). For learning the optimal control policy, RL interacts directly with the real-world environment or a well calibrated model. However, due to operational constraints involved in real-world exploration and high-fidelity data availability challenges, RL models learn not so-accurate policies that further impact the solution quality.

SUMMARY

Embodiments of the present disclosure present technological improvements as solutions to one or more of the above-mentioned technical problems recognized by the inventors in conventional systems. For example, in one embodiment, a method for optimal power allocation in large-scale electric vehicle charging network is provided. The method includes receiving at each time instant, an electric vehicle data corresponding to each electric vehicle amongst a plurality of electric vehicles (EVs) arriving in an EV charging network having a cluster topology. The EV charging network is initialized with a set of parameters comprising (i) a set of network configuration parameters comprising a plurality of clusters and a set of chargers corresponding to each cluster amongst the plurality of clusters, (ii) a sanctioned power by an electrical grid for the EV charging network for at least one day, and (iii) a power rating for each charger in the charging network. A set of EVs amongst the plurality of EVs is assigned to each cluster amongst the plurality of clusters. The electric vehicle data of each EV comprising (i) a current state of charge (SoC), (ii) a required SoC, (iii) a customer type comprising at least one of (a) a prime customer, or (b) a non-prime customer, and (iv) a battery capacity. Further, the method includes iteratively performing a set of steps at each time instant to optimally allocate power to each cluster, until a predefined time interval is met. The set of steps includes removing from each cluster a first subset set of EVs amongst the set of EVs, wherein the first subset of EVs has received the required SoC. Further the set of steps includes assigning in a first come first serve rule, a second subset of EVs amongst the set of EVs to a set of available chargers amongst the set of chargers in the corresponding cluster. Finally, the set of steps includes recommending an optimal allocated power to each cluster by solving an optimization function with a set of constraints modelled as a mixed-integer non-linear program. The optimization function is based on (i) a penalty term based on an available supply capacity, (ii) an allocated power to a charger in a cluster at a time instant, and (iii) the customer type at the charger in the cluster. The set of constraints includes nine constraints. A first constraint based on a power flow condition between the electrical grid and the plurality of clusters. A second constraint based on a power flow condition between each cluster of the plurality of clusters and the corresponding set of chargers. A third constraint wherein the allocated power to each charger is non-negative, not exceeding the power rating of the corresponding charger. A fourth constraint wherein the allocated power to each charger depends on the customer type and an existing charging load using a binary variable. A fifth constraint wherein the binary variable is derived from the customer type for each cluster, wherein the binary variable is one of (i) 1 indicating at least one prime customer and at least one non-prime present in a corresponding cluster (ii) 0 indicating same customer type in a corresponding cluster. A sixth constraint is providing an equal amount of power to a set of prime customers of each cluster based on the set of available chargers in the corresponding cluster. A seventh constraint is providing an equal amount of power to a set of non- prime customers of each cluster based on the set of available chargers in the corresponding cluster. An eighth constraint is allocating power to at least one available charger. A ninth constraint where the SoC of each EV in the EV charging network at any time instant is based on allocated power to the corresponding charger of each EV, the battery capacity of each EV, and the predefined time interval.

In another aspect, a system for optimal power allocation in large-scale electric vehicle charging network is provided. The system comprises memory storing instructions; one or more communication interfaces; and one or more hardware processors coupled to the memory via the one or more communication interfaces, wherein the one or more hardware processors are configured by the instructions to receive at each time instant, an electric vehicle data corresponding to each electric vehicle amongst a plurality of electric vehicles (EVs) arriving in an EV charging network having a cluster topology. The EV charging network is initialized with a set of parameters comprising (i) a set of network configuration parameters comprising a plurality of clusters and a set of chargers corresponding to each cluster amongst the plurality of clusters, (ii) a sanctioned power by an electrical grid for the EV charging network for at least one day, and (iii) a power rating for each charger in the charging network. A set of EVs amongst the plurality of EVs is assigned to each cluster amongst the plurality of clusters. The electric vehicle data of each EV comprising (i) a current state of charge (SoC), (ii) a required SoC, (iii) a customer type comprising at least one of (a) a prime customer, or (b) a non-prime customer, and (iv) a battery capacity. Further, the system includes iteratively performing a set of steps at each time instant to optimally allocate power to each cluster, until a predefined time interval is met. The set of steps includes removing from each cluster a first subset set of EVs amongst the set of EVs, wherein the first subset of EVs has received the required SoC. Further the set of steps includes assigning in a first come first serve rule, a second subset of EVs amongst the set of EVs to a set of available chargers amongst the set of chargers in the corresponding cluster. Finally, the set of steps includes recommending an optimal allocated power to each cluster by solving an optimization function with a set of constraints modelled as a mixed-integer non-linear program. The optimization function is based on (i) a penalty term based on an available supply capacity, (ii) an allocated power to a charger in a cluster at a time instant, and (iii) the customer type at the charger in the cluster. The set of constraints includes nine constraints. A first constraint based on a power flow condition between the electrical grid and the plurality of clusters. A second constraint based on a power flow condition between each cluster of the plurality of clusters and the corresponding set of chargers. A third constraint wherein the allocated power to each charger is non-negative, not exceeding the power rating of the corresponding charger. A fourth constraint wherein the allocated power to each charger depends on the customer type and an existing charging load using a binary variable. A fifth constraint wherein the binary variable is derived from the customer type for each cluster, wherein the binary variable is one of (i) 1 indicating at least one prime customer and at least one non-prime present in a corresponding cluster (ii) 0 indicating same customer type in a corresponding cluster. A sixth constraint is providing an equal amount of power to a set of prime customers of each cluster based on the set of available chargers in the corresponding cluster. A seventh constraint is providing an equal amount of power to a set of non- prime customers of each cluster based on the set of available chargers in the corresponding cluster. An eighth constraint is allocating power to at least one available charger. A ninth constraint where the SoC of each EV in the EV charging network at any time instant is based on allocated power to the corresponding charger of each EV, the battery capacity of each EV, and the predefined time interval.

The power rating is identical for the set of chargers corresponding to each cluster. Solving the optimization function at each time instant is based on a set of passive heuristic and a set of active heuristic to handle real time disruptions. The set of passive heuristic comprises allocating a fourth set of EVs amongst the first set of EVs to one or more chargers. The set of active heuristic comprises not assigning the fourth set of EVs to the one or more chargers if unavailable at a particular time instant and adding to a service queue corresponding to each cluster until a charger is available.

In yet another aspect, there are provided one or more non-transitory machine-readable information storage media comprising one or more instructions which when executed by one or more hardware processors cause for optimal power allocation in large-scale electric vehicle charging network by receiving at each time instant, an electric vehicle data corresponding to each electric vehicle amongst a plurality of electric vehicles (EVs) arriving in an EV charging network having a cluster topology. The EV charging network is initialized with a set of parameters comprising (i) a set of network configuration parameters comprising a plurality of clusters and a set of chargers corresponding to each cluster amongst the plurality of clusters, (ii) a sanctioned power by an electrical grid for the EV charging network for at least one day, and (iii) a power rating for each charger in the charging network. A set of EVs amongst the plurality of EVs is assigned to each cluster amongst the plurality of clusters. The electric vehicle data of each EV comprising (i) a current state of charge (SoC), (ii) a required SoC, (iii) a customer type comprising at least one of (a) a prime customer, or (b) a non-prime customer, and (iv) a battery capacity. Further, instructions which when executed by the one or more hardware processors cause iteratively performing a set of steps at each time instant to optimally allocate power to each cluster, until a predefined time interval is met. The set of steps includes removing from each cluster a first subset set of EVs amongst the set of EVs, wherein the first subset of EVs has received the required SoC. Further the set of steps includes assigning in a first come first serve rule, a second subset of EVs amongst the set of EVs to a set of available chargers amongst the set of chargers in the corresponding cluster. Finally, the set of steps includes recommending an optimal allocated power to each cluster by solving an optimization function with a set of constraints modelled as a mixed-integer non-linear program. The optimization function is based on (i) a penalty term based on an available supply capacity, (ii) an allocated power to a charger in a cluster at a time instant, and (iii) the customer type at the charger in the cluster. The set of constraints includes nine constraints. A first constraint based on a power flow condition between the electrical grid and the plurality of clusters. A second constraint based on a power flow condition between each cluster of the plurality of clusters and the corresponding set of chargers. A third constraint wherein the allocated power to each charger is non-negative, not exceeding the power rating of the corresponding charger. A fourth constraint wherein the allocated power to each charger depends on the customer type and an existing charging load using a binary variable. A fifth constraint wherein the binary variable is derived from the customer type for each cluster, wherein the binary variable is one of (i) 1 indicating at least one prime customer and at least one non-prime present in a corresponding cluster (ii) 0 indicating same customer type in a corresponding cluster. A sixth constraint is providing an equal amount of power to a set of prime customers of each cluster based on the set of available chargers in the corresponding cluster. A seventh constraint is providing an equal amount of power to a set of non- prime customers of each cluster based on the set of available chargers in the corresponding cluster. An eighth constraint is allocating power to at least one available charger. A ninth constraint where the SoC of each EV in the EV charging network at any time instant is based on allocated power to the corresponding charger of each EV, the battery capacity of each EV, and the predefined time interval.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for optimal power allocation in large-scale electric vehicle charging network according to some embodiments of the present disclosure.

FIG. 2 is an exemplary flow diagram illustrating a method for optimal power allocation in large-scale electric vehicle charging network according to some embodiments of the present disclosure.

FIG. 3 illustrates an electric vehicle charging network having cluster topology in accordance with some embodiments of the present disclosure.

FIG. 4A and FIG.4B illustrate state of a charger using mixed integer based linear program-based power allocation using a set of passive heuristics and a set of active heuristics respectively according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The charging network operator (CNO) aims to maximize utilization of the chargers in an electric vehicle (EV) charging network having cluster topology post the deployment, while maintaining good customer experience and minimizing the grid electricity cost. These objectives could be potentially conflicting. Because commercial electricity pricing has the peak demand (maximum demand (MD) charges) as a major component, the CNO typically does not provision the grid supply for the peak EV power demand (i.e., when all chargers are simultaneously active at maximum rated capacity). The sanctioned grid capacity may also not be always in sync with a modular expansion of the charging network with additional chargers. Finally, the grid itself may not be able to supply the contracted peak demand, especially in developing economies. Customers, however, like to charge at their convenience at any free charger in any cluster. Further, customers would like to charge as quickly as possible. Allowing customers to charge at their desired power consumption at any charger lead to imbalances across clusters in the charging network and exceed the grid level contracted peak demand, leading to heavy penalties. One approach could be demand-side management of EVs by assigning them to specific chargers; this requires parking management systems. An alternate approach is to intelligently manage the power flow in the charging network by fixing the charging rate of an EV, while allowing its flexibility in choosing the charger. During periods of peak demand, prime customers could be prioritized with higher charging rates as an additional degree of freedom.

Intelligent power management requires the CNO to decide the power to be allocated to each charger (and therefore each cluster) while meeting the following requirements. The first requirement being the net power consumption of the facility must respect the grid sanctioned supply. Exceeding the sanctioned power budget results in disruptions or penalties. The second requirement is to increase the facility throughput and service user base, the charging time of EVs should be minimal. During peak demand, the CNO should prioritize prime customers for better service. The third requirement is given the stochastic nature of EV charging demand, decision-making must happen in real-time and be adaptive. The problem of managing the power consumption at each charger while meeting these requirements can be computationally challenging.

The present disclosure provides a method based on mathematical programming to optimize power allocation decisions. At every decision step, the disclosed system observes the state of the EV charging network (that includes the cluster-level charging load and customer type) and decides the power allocation strategy to each charger. The cost function and operating constraints optimize decisions in a manner that not only meet the system objective of prioritized power flow to specific customer types, but also ensure effective capacity utilization of available power in the charging facility. The disclosed method segments the large-size problem into a problem tree of relatively smaller sizes. Optimal decisions for individual chargers are aggregated to derive the cluster level solution. The power flow relationships captured in the method eventually optimize the overall power allocation strategy for all chargers in the EV charging network.

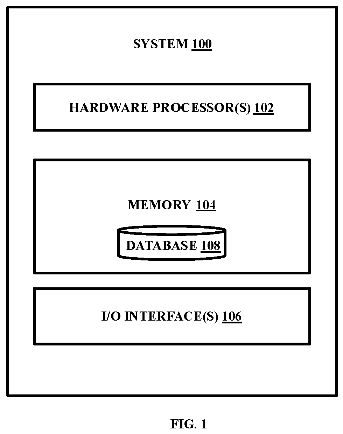

Referring now to the drawings, and more particularly to FIG. 1 through FIG. 4B, where similar reference characters denote corresponding features consistently throughout the figures, there are shown preferred embodiments and these embodiments are described in the context of the following exemplary system and/or method.

FIG. 1 illustrates an exemplary block diagram of a system 100 configured for optimal power allocation in large-scale electric vehicle (EV) charging network according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

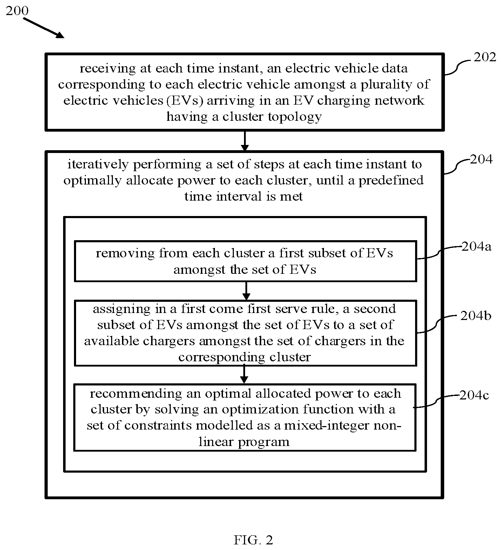

In an embodiment, the memory 104 includes a plurality of modules as depicted in FIG. 2, optimal power allocation model (not shown) and the like. Further, the plurality of modules includes programs or coded instructions that supplement applications or functions performed by the system 100 for executing different steps involved in the process for optimal power allocation being performed by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database 108 or repository. The database can store data such as EV charging network parameters (not shown), electric vehicle data and the like. The memory 104 may comprise information pertaining to input(s)/output(s) of each step performed by the processor(s) 102 of the system 100 and methods of the present disclosure. In an embodiment, the database 108 may be external (not shown) to the system 100 and coupled via the I/O interface 106. The database may include data sources corresponding to EV charging network, EV data, and so on.

FIG. 2 is an exemplary flow diagram illustrating a method 200 for optimal power allocation in large-scale electric vehicle charging network according to some embodiments of the present disclosure. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

The CNO needs to manage a large EV charging network of chargers. The EV charging network draws power from an electrical grid and allocates it to all charging clusters based on the demand that is observed at the charging point level; which is reflective of the EV charging requirement of the customers. The operator views customers as prime or non-prime customers. Prime customers hold precedence over their non-prime counterparts for several discernible reasons to receive the maximum power for charging. On the other hand, non-prime customers get power with lower priority. Within the same cluster, power is allocated equally to each type of customer. However, based on system dynamics, the power allocations to prime and non-prime customers in different clusters may differ. The CNO needs to effectively manage operations by performing real-time power allocation to every cluster and charger in the EV charging network. This decision should not only account for the charging load at a cluster-level but must comply with the infrastructure constraints of the EV charging network; power usage agreement with the electrical grid; and service-level agreement with EV customers.

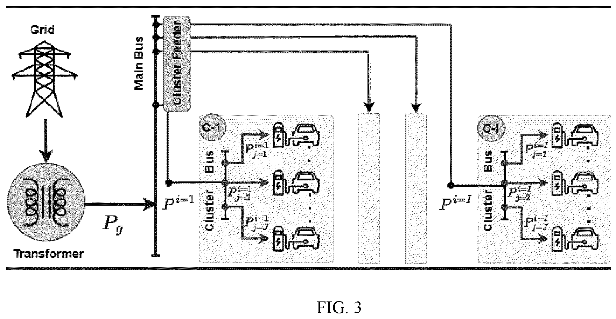

Now referring to FIG. 2, at step 202 of the method 200, one or more hardware processors are configured to receive at each time instant, an electric vehicle data corresponding to each electric vehicle amongst a plurality of electric vehicles (EVs) arriving in the EV charging network having the cluster topology. FIG. 3 illustrates an electric vehicle charging network having cluster topology in accordance with some embodiments of the present disclosure. The EV charging network is initialized with a set of parameters which includes (i) a set of network configuration parameters comprising a plurality of clusters ($G = \{G^1, G^2, ..., G^I\}$) and a set of chargers ($G^i = \{C_1^i, ..., C_{j^i}^i\}$) corresponding to each cluster amongst the plurality of clusters, (ii) a sanctioned power ($P_g$) by the electrical grid for the EV charging network for at least one day, and (iii) a power rating for each charger in the charging network. Every charger in cluster $i$ is denoted as ($j = \{1, ..., J^i\}$). A set of EVs amongst the plurality of EVs is assigned to each cluster amongst the plurality of clusters. Every cluster has a queue where EVs are held for service. The electric vehicle data of each EV includes (i) a current state of charge (SoC), (ii) a required SoC, (iii) a customer type, and (iv) a battery capacity. These parameters are assumed to be known upon arrival of the EV. The customer type is any one of a prime customer or a non-prime customer. All chargers in the network are identical with same power rating $\bar{P}_j^i$ and charging profile. The charging clusters are disjoint as none of the ($J^i \times I$) chargers are associated with more than one cluster.

Further at step 204 of the method 200, one or more hardware processors are configured to iteratively perform a set of steps at each time instant (t) to optimally allocate power to each cluster until a predefined time interval is met. The set of steps 204a till 204c are explained hereafter. At step 204a, a first subset of EVs amongst the set of EVs are removed from each cluster. The first subset of EVs which have received the required SoC are removed from each cluster. At step 204b, a second subset of EVs amongst the set of EVs are assigned in a first-come first serve basis to a set of available chargers amongst the set of chargers in the corresponding cluster. Finally at step 204c, an optimal allocated power is recommended to each cluster by solving an optimization function with a set of constraints modelled as a mixed-integer non-linear program. The objective is to maximize power allocation for prime customers and is represented as,

$$\mathcal{U} = \max \left\{ \sum_{i=1}^{I} \sum_{j=1}^{J^i} \alpha_j^i(t).P_j^i(t) - \overline{\mathcal{U}} \right\} \qquad (1)$$

Where $P_j^i(t)$ is an allocated power to a charger j in cluster i at time instant t, $\alpha_j^i(t)$ indicates the customer type at charger j in cluster i, i.e., $\alpha_j^i(t)$ is 1 if customer at charger j in cluster i at time t is prime and 0 otherwise. The penalty term $\overline{U}$ is the cost of not effectively utilizing the available supply capacity at the time of power allocation and is represented as,

$$\overline{U} = \left(P_g(t) - \sum_{i=1}^{N} P^i(t)\right) \tag{2}$$

Equation 1 is subject to the set of constraints as given below from first constraint to nineth constraint.

1) A first constraint is based on a power flow condition between the electrical grid and the plurality of clusters. The power flow condition between the grid and the EV charging network clusters is given by equation 3. It validates that the total power allocated to all charging clusters in the network is within the power sanction limit.

$$P_g(t) \geq \sum_{i=1}^{N} P^i(t), \forall t \tag{3}$$

2) A second constraint is based on a power flow condition between each cluster of the plurality of clusters and the corresponding set of chargers. The power flow condition between clusters and chargers is given by equation 4. It ensures that the power allocated to each cluster is equal to the total power allocated to all the chargers in that cluster.

$$P_i(t) = \sum_{i=1}^{J^i} P_j^i(t), \forall i \in I, t \tag{4}$$

3) A third constraint is defined wherein the allocated power to each charger is non-negative not exceeding the power rating of the corresponding charger. The power allocated to each charger must be non-negative and should not exceed the power rating of the respective charger. This condition is checked by equation 5,

$$0 \leq P_j^i(t) \leq \overline{P}_j^i, \forall i \in I, j \in J \tag{5}$$

4) A fourth constraint is defined wherein the allocated power to each charger depends on the customer type and an existing charging load using a binary variable. The power allocated to charger j in cluster i at time t depends on the customer type (prime or non-prime) and existing charging load.

(a): If same type customers are in a cluster, each one of them must get equal share of the available power in that cluster.
(b): If mixed type customers are in a cluster, maximum power must be given to prime customers in that cluster. Power remaining, post this allocation, can only be availed by non-prime customers. However, the maximum power flow to prime customers is modulated and the control is set by the operator. The enforcement of this condition is performed by equation 6,

$$\lambda_i(t)\left(\alpha_j^i(t)\left[P_j^i(t) - W_i(t)\frac{P^i(t)}{a^i(t)}\right] + \cdots \left(1 - \alpha_j^i(t)\right)\left[P_j^i(t) - \frac{P^i(t)}{a^i(t)}\right]\right) + \cdots \left(1 - \lambda^i(t)\right)\left(P_j^i(t) - \frac{P^i(t)}{a^i(t)+b^i(t)}\right) \leq 0, \forall i \in I, j \in J, t \tag{6}$$

where $W_i(t)$ is weightage $\in [0,1]$ given to prime customers in cluster i at time t, $\lambda_i(t)$ is 1 if mixed type customers are present in cluster i at time t and 0 if same type customers are present in cluster i at time t,

$$\mathcal{A}^i(t) = \{a_1^i(t), \ldots, a_{K^i}^i(t)\}$$

is set of $K^i(t)$ prime customers in cluster i at time t, $\mathcal{B}^i(t) = \{b_1^i(t), \ldots, b_{N^i}^i(t)\}$ is set of $N^i(t)$ non-prime customers in cluster i at time t.

5) A fifth constraint is defined wherein the binary variable is derived from the customer type for each cluster. The binary variable is one of (i) 1 indicating at least one prime customer and at least one non-prime present in a corresponding cluster (ii) 0 indicating same customer type in a corresponding cluster. The value of the binary variable $\lambda_i(t)$ is derived as per equation 7,

$$\lambda^i(t) = \left\lceil \frac{1}{(J^i)^2} . a^i(t). b^i(t) \right\rceil, \forall i \in I, t \qquad (7)$$

6) A sixth constraint is defined as providing an equal amount of power to a set of prime customers of each cluster based on the set of available chargers in the corresponding cluster. Based on the availability of chargers, all prime customers within a cluster must get equal share of power. This condition is checked by equation 8,

$$\theta_j^i(t)\theta_k^i(t)\left[P_j^i(t) - P_k^i(t)\right] = 0, j \neq k, \forall i \in I, j \in J, k \in \mathcal{A}^i(t), t \qquad (8)$$

where $\theta_j^i(t)$ is 1 if charger j in cluster i at time t is available and 0 otherwise.

7) A seventh constraint is defined as providing an equal amount of power to a set of non- prime customers of each cluster based on the set of available chargers in the corresponding cluster. Based on the availability of chargers, all non-prime customers within a cluster must get equal share of power. This condition is checked by equation 9,

$$\theta_j^i(t)\theta_k^i(t)\left[P_j^i(t) - P_k^i(t)\right] = 0, j \neq k, \forall i \in I, j \in J, k \in \mathcal{B}^i(t), t \qquad (9)$$

8) An eighth constraint is defined as allocating power to at least one available charger. Power must only be allocated to the charger if it is available, as is given by equation 10,

$$P_j^i(t) \leq \theta_j^i(t). \bar{P}_j^i, \forall i \in I, j \in J, t \qquad (10)$$

9) A nineth constraint is defined where the SoC of each EV in the EV charging network at any time instant is based on allocated power to the corresponding charger of each EV, the battery capacity of each EV, and the predefined time interval. At any given time, the SoC of each EV in the charging network is given by equation 11,

$$\bar{Q}_j^i(t) = Q_j^i + \frac{t_T. P_j^i(t)}{B_j^i}, \forall i \in I, j \in J, t \qquad (11)$$

Where $Q_j^i(t)$ is SOC of EV at the start of the interval t at charger j in cluster i, $B_j^i$ is battery capacity of EV at charger j in cluster i, $t_T$ is time interval, $\bar{Q}_j^i(t)$ is SOC of EV at the end of interval t at charger j in cluster i.

The decision problem (as described in equations 1-11) is modeled as a mixed-integer non-linear program (MINLP). The mixed integer linear program (MILP) formulation is obtained by replacing the nonlinear fourth constraint as depicted in equation 6 with the following set of linear constraints (equations 12 till 17). For this approximation, the binary variables $x_j^i(t)$ and $y_j^i(t)$ are introduced, and M is considered to be a very large positive number.

$$P_j^i(t) - W^i(t)\frac{P^i(t)}{a^i(t)} \leq M.\left(1 - \lambda^i(t)\right) + M.x_j^i(t) \qquad (12)$$

$$P_j^i(t) - \frac{P^i(t)}{b^i(t)} \leq M.\left(1 - \lambda^i(t)\right) + M.y_j^i(t) \qquad (13)$$

$$P_j^i(t) - \frac{P^i(t)}{a^i(t) + b^i(t)} \leq M.\lambda^i(t) \qquad (14)$$

$$x_j^i(t) + y_j^i(t) = 1 \qquad\qquad (15)$$

$$x_j^i(t) \leq 1 - \alpha_j^i(t) \qquad\qquad (16)$$

$$y_j^i(t) \leq \alpha_j^i(t) \qquad\qquad (17)$$

Solving the optimization function at each time instant is based on a set of passive heuristic and a set of active heuristic to handle real time disruptions. There could be scheduled maintenance of chargers, or unplanned service disruptions during charging sessions due to power or network problems. Both of these operational scenarios impact the availability of chargers. Under the assumption that the operator can ascertain the (un)planned downtime of chargers, either due to a-prior information or real-time diagnosis, the following two heuristics, the set of passive heuristics and the set of active heuristics are used with the mathematical program to handle real-time disruptions.

a) The set of passive heuristics or lazy heuristics (H1) is defined such that at each decision time t, electric vehicles are allocated to chargers regardless of their availability status. It is assumed that the unavailable chargers will become functional after a certain time. Therefore, EVs remain at the assigned chargers until the chargers become operational again.
b) The set of active heuristics (H2) is defined such that at each decision time t, the following two strategies are used based on the charger status.

1) Unavailable (at t): EVs are not allocated to those chargers
2) Available (at t) || Unavailable (any > t): EVs are put back in the service queue (with priority) for assignment to the next available chargers in the same cluster.

SIMULATION RESULTS: The disclosed MILP approach is evaluated through simulations on a charging network parameterized by the number of clusters (5/50/500) and chargers (5/10/20/40) in each cluster; grid sanctioned power supply as a percentage of the total network capacity (75%/95%); weightage given to prime customers (0.8/1); and downtime of chargers (10 - 15 / 30 - 45 / 60 - 75 minutes). Case 1, case 2 and case 3 in Table 1 capture all these scenarios for analysis. The charging network is therefore evaluated for different scales ranging from 25 to 20,000 chargers. It is assumed that all EVs are identical with a battery capacity of 40.5kWh and all chargers are similar with a maximum power rating of 30kW. The EV arrival time is sampled from an uniform distribution within [0,t] with a 50% binary probability of it being prime; and its initial and target SoC levels are sampled from normal distributions with 25% deviation, and mean value of 50% & 85% respectively. The MILP approach is evaluated against a greedy baseline (BL) that allocates the maximum power to chargers and clusters servicing prime customers; where cluster-level allocations are weighted based on the population size of prime customers in each clusters. The disruption management heuristics (H1 & H2) is evaluated by comparing their average time reduction in resuming the charging service.

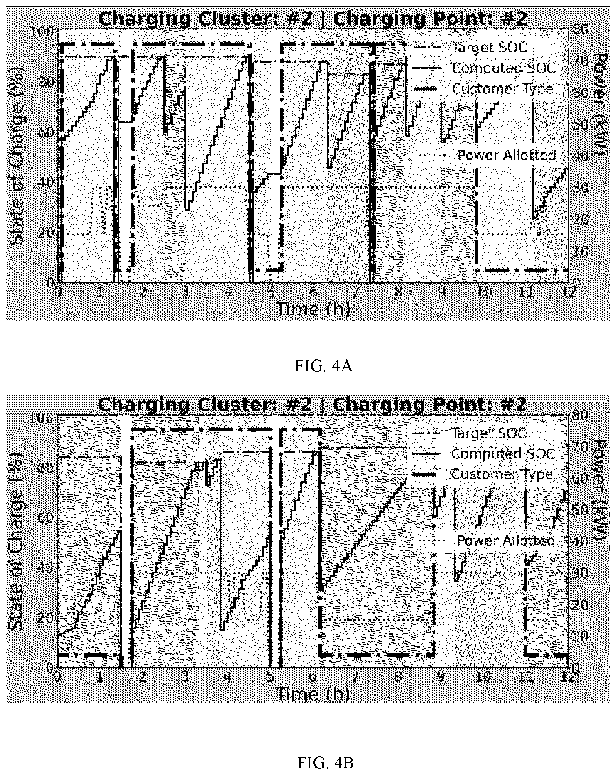

FIG. 4A and FIG.4B illustrate state of a charger using mixed integer based linear program-based power allocation using a set of passive heuristics and a set of active heuristics respectively according to some embodiments of the present disclosure. The different color shades within each sub-figure depict the charging session of every EV receiving charge at a particular charger in a given cluster. Each EV arrives at a charger with an initial SoC and departs upon SoC fulfillment, which corresponds to the start and end of the shaded regions. The current and target SoC levels for a decision interval are also shown in the figure. The customer type is depicted as a curve that toggles between two values: 5 (denotes non-prime) and 95 (denotes prime). The white colored region represents the unavailability duration of a charger, which in this case occurs at 2:30-2:45 hours. At a time interval of every 5 minutes, the optimal power allocation decision (shown as a dotted curve) is taken for the EV charging network.

Table 1, Table 2 and Table 3 shows the comparative analysis between MILP and BL using H1/H2 for case 1, case 2 and case 3 respectively. Case 1, case 2 and case 3 provide data corresponding to 500 charging clusters, 5, 10, 20 and 40 chargers per charging clusters providing 2500, 5000, 10000, and 20000 chargers respectively. 500 charging clusters with 5 chargers is represented as D1, 500 charging clusters with 10 chargers is represented as D2, 500 charging clusters with 20 chargers is represented as D3, and 500 charging clusters with 40 chargers is represented as D4 in Table 1, Table 2 and Table 3. Case 1 corresponds to grid sanctioned power is 95% of installed capacity, weightage for prime customers is 1 and charger unavailability duration is 10-15 mins. Case 2 corresponds to grid sanctioned power is 75% of installed capacity, weightage for prime customers is 1 and charger unavailability duration is 30-45 mins. Case 3 corresponds to grid sanctioned power is 75% of installed capacity, weightage for prime customers is 0.8 and charger unavailability duration is 60-75 mins. The results show three key aspects. First, in terms of solution accuracy, MILP outperforms BL by around 40% (where higher value is a better solution). The solution quality of BL suffers due to 12% lower power allocations to prime customers and higher penalty from inefficient utilization of available supply capacity. Even with the decrease in grid power supply from 95% to 75% of the network capacity, MILP-based power allocations to prime customers are maintained between 50% and 52%; but BL reports lower allocation levels of 38% on average. Second, in terms of solution speed, MILP takes only a few seconds (for less than 10, 000 chargers) to less than a minute (for 20, 000 chargers); which is very well within the 5 minutes decision interval. BL is 5 times faster than MILP. The solution speed in case 2 and case 3 is better than case 1 since the decision space is reduced due to the unavailability of chargers over relatively longer duration. Third, in terms of service time reduction under network disruption and unavailability of chargers, H2 achieves 66% better performance than H1 in general; with time savings improving with the network size (note the last two columns in the table).

Table 1

| Data | Avg. Solution cost | | Avg. Solution Speed (Sec) | | Avg. power allocation % (Prime customers) | | Avg. Service time reduction (using H2) % | |
|---|---|---|---|---|---|---|---|---|
| | MILP/H1 | BL/H1 | MILP/H1 | BL/H1 | MILP/H1 | BL/H1 | MILP | BL |
| D1 | 36,504 .79 - | - 25,419. 96 | 1.65 | 0.390 | 51.23 | 32.53 | 37.20 | 11.65 |
| D2 | 73,333.85 | 24,644.1 | 3.50 | 0.750 | 51.46 | 39.94 | 60.00 | 38.00 |
| D3 | 146,105.20 | 89083.94 | 8.30 | 1.450 | 51.26 | 44.44 | 78.00 | 65.06 |
| D4 | 29,1989.47 | 21,9644.07 | 24.57 | 3.750 | 51.23 | 46.69 | 89.16 | 85.60 |

Table 2

| Data | Avg. Solution cost | | Avg. Solution Speed (Sec) | | Avg. power allocation % (Prime customers) | | Avg. Service time reduction (using H2) % | |
|---|---|---|---|---|---|---|---|---|
| | MILP /H1 | BL/H1 | MILP/ H1 | BL/H1 | MILP/ H1 | BL/H1 | MILP | BL |
| D1 | 36,50 9.47 | - 5,283.19 | 1.29 | 0.540 | 51.24 | 31.88 | 69.29 | 21.33 |
| D2 | 71,47 6.14 | 23,078.04 | 2.63 | 1.050 | 50.16 | 38.80 | 85.05 | 57.33 |
| D3 | 145,7 90.41 | 87,641.43 | 6.30 | 1.960 | 51.15 | 43.50 | 92.79 | 80.64 |
| D4 | 290,7 74.27 | 220,848.83 | 22.74 | 3.880 | 51.01 | 45.99 | 96.53 | 93.06 |

Table 3

| Data | Avg. Solution cost | | Avg. Solution Speed (Sec) | | Avg. power allocation % (Prime customers) | | Avg. Service time reduction (using H2) % | |
|---|---|---|---|---|---|---|---|---|
| | MILP /H1 | BL/H1 | MILP/ H1 | BL/H1 | MILP/ H1 | BL/H1 | MILP | BL |
| D1 | 29,43 4.16 | - 4,430.69 | 1.30 | 0.520 | 52.33 | 31.76 | 80.30 | 23.26 |
| D2 | 59,25 5.93 | 10,300.1 4 | 3.9 | 1.090 | 52.67 | 37.09 | 88.81 | 48.00 |
| D3 | 117,2 29.27 | 40,251.7 8 | 11.6 | 2.010 | 52.10 | 39.80 | 92.39 | 68.96 |
| D4 | 234,7 24.06 | 99,494.7 3 | 35.20 | 4.180 | 52.16 | 41.11 | 95.78 | 86.52 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses the power allocation problem for a EV charging network with constraints on energy demand; power supply capacity; available network capacity; customer types and their priority-level; and formulate the optimization problem to maximize the power flow to prime customers in the charging network. The disclosed method for solving the power allocation problem scale efficiently to large network sizes involving hundreds of clusters and chargers. A solution approach based on mixed-integer linear program is used for solving the power allocation problem.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor implemented method (200) comprising:

receiving at each time instant (202), via one or more hardware processors, an electric vehicle data corresponding to each electric vehicle amongst a plurality of electric vehicles (EVs) arriving in an EV charging network having a cluster topology,

wherein the EV charging network is initialized with a set of parameters comprising (i) a set of network configuration parameters comprising a plurality of clusters and a set of chargers corresponding to each cluster amongst the plurality of clusters, (ii) a sanctioned power by an electrical grid for the EV charging network for at least one day, and (iii) a power rating for each charger in the charging network,
wherein a set of EVs amongst the plurality of EVs is assigned to each cluster amongst the plurality of clusters,
wherein the electric vehicle data of each EV comprising (i) a current state of charge (SoC), (ii) a required SoC, (iii) a customer type comprising at least one of (a) a prime customer, or (b) a non-prime customer, and (iv) a battery capacity,

iteratively performing (204), via the one or more hardware processors, a set of steps at each time instant to optimally allocate power to each cluster, until a predefined time interval is met, wherein the set of steps comprises:

a) removing from each cluster a first subset set of EVs amongst the set of EVs, wherein the first subset of EVs has received the required SoC (204a),

b) assigning in a first come first serve rule, a second subset of EVs amongst the set of EVs to a set of available chargers amongst the set of chargers in the corresponding cluster (204b),

c) recommending an optimal allocated power to each cluster by solving an optimization function with a set of constraints modelled as a mixed-integer non-linear program, wherein the optimization function is based on (i) a penalty term based on an available supply capacity, (ii) an allocated power to a charger in a cluster at a time instant, and (iii) the customer type at the charger in the cluster (204c),

wherein the set of constraints comprising,

i) a first constraint based on a power flow condition between the electrical grid and the plurality of clusters,

ii) a second constraint based on a power flow condition between each cluster of the plurality of clusters and the corresponding set of chargers,

iii) a third constraint wherein the allocated power to each charger is non-negative not exceeding the power rating of the corresponding charger,

iv) a fourth constraint wherein the allocated power to each charger depends on the customer type and an existing charging load using a binary variable,

v) a fifth constraint wherein the binary variable is derived from the customer type for each cluster, wherein the binary variable is one of (a) 1 indicating at least one prime customer and at least one non-prime present in a corresponding cluster (b) 0 indicating same customer type in a corresponding cluster,

vi) a sixth constraint is providing an equal amount of power to a set of prime customers of each cluster based on the set of available chargers in the corresponding cluster,

vii) a seventh constraint is providing an equal amount of power to a set of non- prime customers of each cluster based on the set of available chargers in the corresponding cluster,

viii) an eighth constraint allocating power to at least one available charger, and

ix) a ninth constraint where the SoC of each EV in the EV charging network at any time instant is based on allocated power to the corresponding charger of each EV, the battery capacity of each EV, and the predefined time interval.

2. The processor implemented method as claimed in claim 1, wherein the power rating is identical for the set of chargers corresponding to each cluster.

3. The processor implemented method as claimed in claim 1, wherein solving the optimization function at each time instant is based on a set of passive heuristic and a set of active heuristic to handle real time disruptions,

wherein the set of passive heuristic comprises allocating a fourth set of EVs amongst the first set of EVs to one or more chargers and

wherein the set of active heuristic comprises not assigning the fourth set of EVs to the one or more chargers if unavailable at a particular time instant and adding to a service queue corresponding to each cluster until a charger is available.

4. A system (100), comprising:

a memory (104) storing instructions;

one or more communication interfaces (106); and

one or more hardware processors (102) coupled to the memory (104) via the one or more communication interfaces (106), wherein the one or more hardware processors (102) are configured by the instructions to:

receive at each time instant, an electric vehicle data corresponding to each electric vehicle amongst a plurality of electric vehicles (EVs) arriving in an EV charging network having a cluster topology,

wherein the EV charging network is initialized with a set of parameters comprising (i) a set of network configuration parameters comprising a plurality of clusters and a set of chargers corresponding to each cluster amongst the plurality of clusters, (ii) a sanctioned power by an electrical grid for the EV charging network for at least one day, and (iii) a power rating for each charger in the charging network, wherein a set of EVs amongst the plurality of EVs is assigned to each cluster amongst the plurality of clusters,

wherein the electric vehicle data of each EV comprising (i) a current state of charge (SoC), (ii) a required SoC, (iii) a customer type comprising at least one of (a) a prime customer, or (b) a non-prime customer, and (iv) a battery capacity,

iteratively perform a set of steps at each time instant to optimally allocate power to each cluster, until a predefined time interval is met, wherein the set of steps comprises:

a) removing from each cluster a first subset set of EVs amongst the set of EVs, wherein the first subset of EVs has received the required SoC,
b) assigning in a first come first serve rule, a second subset of EVs amongst the set of EVs to a set of available chargers amongst the set of chargers in the corresponding cluster,
c) recommending an optimal allocated power to each cluster by solving an optimization function with a set of constraints modelled as a mixed-integer non-linear program, wherein the optimization function is based on (i) a penalty term based on an available supply capacity, (ii) an allocated power to a charger in a cluster at time instant, and (iii) the customer type at the charger in the cluster ,
wherein the set of constraints comprising,

i) a first constraint based on a power flow condition between the electrical grid and the plurality of clusters,
ii) a second constraint based on a power flow condition between each cluster of the plurality of clusters and the corresponding set of chargers,
iii) a third constraint wherein the allocated power to each charger is non-negative not exceeding the power rating of the corresponding charger,
iv) a fourth constraint wherein the allocated power to each charger depends on the customer type and an existing charging load using a binary variable,
v) a fifth constraint wherein the binary variable is derived from the customer type for each cluster, wherein the binary variable is one of (a) 1 indicating at least one prime customer and at least one non-prime present in a corresponding cluster (b) 0 indicating same customer type in a corresponding cluster,
vi) a sixth constraint is providing an equal amount of power to a set of prime customers of each cluster based on the set of available chargers in the corresponding cluster,
vii) a seventh constraint is providing an equal amount of power to a set of non- prime customers of each cluster based on the set of available chargers in the corresponding cluster,
viii) an eighth constraint allocating power to at least one available charger, and
ix) a ninth constraint where the SoC of each EV in the EV charging network at any time instant is based on allocated power to the corresponding charger of each EV, the battery capacity of each EV, and the predefined time interval.

5. The system as claimed in claim 4, wherein the power rating is identical for the set of chargers corresponding to each cluster.

6. The system as claimed in claim 4, wherein solving the optimization function at each time instant is based on a set of passive heuristic and a set of active heuristic to handle real time disruptions,

wherein the set of passive heuristic comprises allocating a fourth set of EVs amongst the first set of EVs to one or more chargers, and
wherein the set of active heuristic comprises not assigning the fourth set of EVs to the one or more chargers if unavailable at a particular time instant and adding to a service queue corresponding to each cluster until a charger is available.

7. One or more non-transitory machine-readable information storage mediums comprising one or more instructions which when executed by one or more hardware processors cause:

receiving at each time instant, an electric vehicle data corresponding to each electric vehicle amongst a plurality of electric vehicles (EVs) arriving in an EV charging network having a cluster topology,

wherein the EV charging network is initialized with a set of parameters comprising (i) a set of network configuration parameters comprising a plurality of clusters and a set of chargers corresponding to each cluster amongst the plurality of clusters, (ii) a sanctioned power by an electrical grid for the EV charging network for at least one day, and (iii) a power rating for each charger in the charging network, wherein a set of EVs amongst the plurality of EVs is assigned to each cluster amongst the plurality of clusters, wherein the electric vehicle data of each EV comprising (i) a current state of charge (SoC), (ii) a required SoC, (iii) a customer type comprising at least one of (a) a prime customer, or (b) a non-prime customer, and (iv) a battery capacity,

iteratively performing a set of steps at each time instant to optimally allocate power to each cluster, until a predefined time interval is met, wherein the set of steps comprises:

a) removing from each cluster a first subset set of EVs amongst the set of EVs, wherein the first subset of EVs has received the required SoC,
b) assigning in a first come first serve rule, a second subset of EVs amongst the set of EVs to a set of available chargers amongst the set of chargers in the corresponding cluster,
c) recommending an optimal allocated power to each cluster by solving an optimization function with a set of constraints modelled as a mixed-integer non-linear program, wherein the optimization function is based on (i) a penalty term based on an available supply capacity, (ii) an allocated power to a charger in a cluster at time instant, and (iii) the customer type at the charger in the cluster ,
wherein the set of constraints comprises,

x) a first constraint based on a power flow condition between the electrical grid and the plurality of clusters,
xi) a second constraint based on a power flow condition between each cluster of the plurality of clusters and the corresponding set of chargers,
xii) a third constraint wherein the allocated power to each charger is non-negative not exceeding the power rating of the corresponding charger,
xiii) a fourth constraint wherein the allocated power to each charger depends on the customer type and an existing charging load using a binary variable,
xiv) a fifth constraint wherein the binary variable is derived from the customer type for each cluster, wherein the binary variable is one of (a) 1 indicating at least one prime customer and at least one non-prime present in a corresponding cluster (b) 0 indicating same customer type in a corresponding cluster,
xv) a sixth constraint is providing an equal amount of power to a set of prime customers of each cluster based on the set of available chargers in the corresponding cluster,
xvi) a seventh constraint is providing an equal amount of power to a set of non- prime customers of each cluster based on the set of available chargers in the corresponding cluster,
xvii) an eighth constraint allocating power to at least one available charger, and
xviii) a ninth constraint where the SoC of each EV in the EV charging network at any time instant is based on allocated power to the corresponding charger of each EV, the battery capacity of each EV, and the predefined time interval.

**8.** The one or more non-transitory machine-readable information storage mediums of claim 7, wherein the power rating is identical for the set of chargers corresponding to each cluster.

**9.** The one or more non-transitory machine-readable information storage mediums of claim 7, wherein solving the optimization function at each time instant is based on a set of passive heuristic and a set of active heuristic to handle real time disruptions,

wherein the set of passive heuristic comprises allocating a fourth set of EVs amongst the first set of EVs to one or more chargers, and
wherein the set of active heuristic comprises not assigning the fourth set of EVs to the one or more chargers if unavailable at a particular time instant and adding to a service queue corresponding to each cluster until a charger is available.

SYSTEM 100

HARDWARE PROCESSOR(S) 102

MEMORY 104

DATABASE 108

I/O INTERFACE(S) 106

FIG. 1

200

receiving at each time instant, an electric vehicle data
corresponding to each electric vehicle amongst a plurality of
electric vehicles (EVs) arriving in an EV charging network
having a cluster topology
202

iteratively performing a set of steps at each time instant to
optimally allocate power to each cluster, until a predefined
time interval is met
204

removing from each cluster a first subset of EVs
amongst the set of EVs
204a

assigning in a first come first serve rule, a second
subset of EVs amongst the set of EVs to a set of
available chargers amongst the set of chargers in the
corresponding cluster
204b

recommending an optimal allocated power to each
cluster by solving an optimization function with a
set of constraints modelled as a mixed-integer non-
linear program
204c

FIG. 2

FIG. 3

FIG. 4A

FIG. 4B

Europäisches
Patentamt

European
Patent Office

Office européen
des brevets

# EUROPEAN SEARCH REPORT

**Application Number**

EP 25 20 2344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ERDEM GÜMRÜKCÜ ET AL: "Optimal load management strategy for large electric vehicle charging stations with undersized charger clusters", IET ELECTRICAL SYSTEMS IN TRANSPORTATION THE INSTITUTION OF ENGINEERING AND TECHNOLOGY, MICHAEL FARADAY HOUSE, SIX HILLS WAY, STEVENAGE, HERTS. SG1 2AY, UK, vol. 12, no. 1, 9 October 2021 (2021-10-09), pages 49-64, XP006115821, ISSN: 2042-9738, DOI: 10.1049/ELS2.12037 * the whole document * | 1-9 | INV. B60L53/62 B60L53/63 B60L53/67 G06Q10/04 G06Q50/06 H02J3/32 |
| Y | TUSHAR WAYES ET AL: "Cost Minimization of Charging Stations With Photovoltaics: An Approach With EV Classification", IEEE TRANSACTIONS ON INTELLIGENT TRANSPORTATION SYSTEMS IEEE, PISCATAWAY, NJ, USA, vol. 17, no. 1, 1 January 2016 (2016-01-01), pages 156-169, XP011595328, ISSN: 1524-9050, DOI: 10.1109/TITS.2015.2462824 [retrieved on 2015-12-23] * abstract * * Sections III, IV * | 1-9 | |
| A | US 2023/415600 A1 (SANKAR NARAYANAN [US] ET AL) 28 December 2023 (2023-12-28) * paragraph [0002] - paragraph [0023]; figures 1, 8 * | 1 | **TECHNICAL FIELDS SEARCHED (IPC)** B60L G06Q H02J |

The present search report has been drawn up for all claims

| Place of search | Date of completion of the search | Examiner |
|---|---|---|
| The Hague | 2 March 2026 | Utz, Tilman |

EPO FORM 1503 03.82 (P04C01)

## ANNEX TO THE EUROPEAN SEARCH REPORT
## ON EUROPEAN PATENT APPLICATION NO.

**EP 25 20 2344**

This annex lists the patent family members relating to the patent documents cited in the above-mentioned European search report.
The members are as contained in the European Patent Office EDP file on
The European Patent Office is in no way liable for these particulars which are merely given for the purpose of information.

**02-03-2026**

| Patent document cited in search report | Publication date | Patent family member(s) | | Publication date |
|---|---|---|---|---|
| US 2023415600 A1 | 28-12-2023 | US | 2023415600 A1 | 28-12-2023 |
| | | WO | 2022104169 A1 | 19-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421077063